# EUROPEAN PATENT SPECIFICATION

(11) **EP 3 114 820 B1**
(45) Date of publication and mention of the grant of the patent: **26.06.2019**
(21) Application number: 15758983.9
(22) Date of filing: 06.03.2015
(51) Int. Cl.: H04W 4/80, H04W 4/08, H04W 36/06, H04W 84/18, H04B 5/00

(54) **METHOD AND SYSTEM FOR ESTABLISHING A SERVICE SESSION BETWEEN SEEKER DEVICE AND ADVERTISER DEVICE**
VERFAHREN UND SYSTEM ZUR HERSTELLUNG EINER DIENSTSITZUNG ZWISCHEN EINER SUCHERVORRICHTUNG UND EINER WERBERVORRICHTUNG
PROCÉDÉ ET SYSTÈME POUR L'ÉTABLISSEMENT D'UNE SESSION DE SERVICE ENTRE UN DISPOSITIF CHERCHEUR ET UN DISPOSITIF D'ANNONCEUR PUBLICITAIRE

(30) Priority: 06.03.2014 IN 1153CH2014; 26.02.2015 IN CH11532014
(43) Date of publication of application: 11.01.2017
(73) Proprietor: Samsung Electronics Co., Ltd., Gyeonggi-do 16677 (KR)
(72) Inventor: PATIL, Mayuresh Madhukar, Bangalore 560037 (IN); HAN, Se-Hee, Gyeonggi-do, 16677 (KR)
(74) Representative: Gulde & Partner
(86) International application number: PCT/KR2015/002194
(87) International publication number: WO 2015/133865

(56) References cited:
- WO-A1-2014/025218
- WO-A1-2014/025218
- US-A1- 2007 218 924
- US-A1- 2011 275 316
- US-A1- 2012 243 524
- US-A1- 2013 196 595
- US-A1- 2013 227 152

## Description

### Technical Field

The present invention relates generally to Wireless-Fidelity (Wi-Fi) Direct systems, and more particularly, to a method and system for establishing a service session between a seeker device and an advertiser device in a wireless peer-to-peer (P2P) network.

### Background Art

Wi-Fi Direct allows two devices to connect directly without an access point. The Wi-Fi Direct is a standard defined by a Wi-Fi Alliance. The Wi-Fi Alliance defines the Application Service Platform (ASP) standard which defines the framework or platform which exposes certain Application Program Interfaces (APIs) to applications, which allows the application easy access to some of the fundamental aspects of the P2P connectivity. The Wi-Fi direct specification defines an architecture, protocols, and functionality for interoperability of the Wi-Fi Direct Services (WFDS) thereby establishing a service session.

Generally, the ASP is a software service or a library that implements the common functions needed by all applications and services conforming to a WFDS specification. The ASP enables or creates a session, which is a logical link between two ASP enabled peers to enable streamlined and structured communication between them. The WFDS enabled system has multiple ASP sessions between two or more devices needing the WFDS functionalities.

Although the general paradigm of WFDS is to establish and maintain relationships as peer devices, there is typically a service advertiser role and a service seeker role in setting up a connection. The service seeker is an application which searches for seeks an advertised service by connecting to the service advertiser. The service advertiser is an application that is visible to provide potential service seekers and expects incoming connection requests from the interested service seekers. The service seeker initiates an ASP session establishment and the service advertiser responds to an incoming request to establish the ASP session.

In existing Near Field Communication (NFC) based connection mechanisms, exchange of Media Access Control (MAC) address enables a seeker device and an advertiser device to trigger the connectivity automatically; the connectivity is the Wi-Fi Direct. The connection mechanism follows the standard set of procedures for initiating the connection, which is considered time consuming and unnecessary at times. The NFC does not provide a mechanism to negotiate the best possible service for particular use cases. For example the seeker device usually selects the service to invoke and only that service will be invoked. For example, in a scenario where the user invokes a WFDS send service in the seeker device, after invoking the send service, the seeker device is connected to the advertiser device to pair the seeker device with the advertiser device. After pairing, detecting that the send service is not supported by the advertiser device, may lead to the dissatisfaction of the user.

The current NFC standards fundamentally lack the clear and easy connection setup when devices use the NFC as an out of band mechanism. Further, the Wi-Fi Direct connection experience is non-intuitive and the connection procedures takes time, leading to a bad user experience.

Document US 2011/275316 A1 discloses out-of-band initialization methods for connection setup for device-to-device communications.

Document WO 2014/025218 A1 discloses transmitting group intent information in addition to a service association frame.

### Disclosure of Invention

### Technical Problem

The present invention provides methods and devices for solving the problem of establishing a service session between a seeker device and an advertiser device in a wireless peer-to-peer (P2P) network.

The present invention also provides methods and devices for solving the problem of exchanging intent between a seeker device and an advertiser device during a Near Field Communication (NFC) data exchange.

### Solution to Problem

In accordance with an aspect of the present invention, a method for establishing a service session in a wireless P2P network is provided. The method includes sending intent from a seeker device to an advertiser device during an NFC data exchange between the seeker device and the advertiser device, wherein the intent corresponds to at least one service and at least one parameter. Further, the method includes establishing the service session between the seeker device and the advertiser device when the at least one service is supported by the advertiser device.

In accordance with an aspect of the present invention, a system for establishing a service session in a wireless P2P network is provided. The system includes a seeker device configured to send intent to an advertiser device during an NFC data exchange between the seeker device and the advertiser device, wherein the intent corresponds to at least one service and at least one parameter, wherein the advertiser device is configured to send a matched intent to the seeker device during the NFC data exchange between the seeker device and the advertiser device, and wherein at least one of the seeker device and advertiser device are configured to establish the service session between the seeker device and the advertiser device when the at least one service is supported by the advertiser device.

In accordance with another aspect of the present invention, a computer program product comprising a computer executable program code recorded on a computer readable non-transitory storage medium is provided. The computer executable program code when executed performing a method including sending an intent from a seeker device to an advertiser device during an NFC data exchange between the seeker device and the advertiser device, wherein the intent corresponds to at least one service and at least one parameter, and establishing the service session between the seeker device and the advertiser device when the at least one service is supported by the advertiser device.

### Advantageous Effects of Invention

The invention is defined by the independent claims. Preferred embodiments are defined in the dependent claims.

### Brief Description of Drawings

The above and other aspects, features, and advantages of certain embodiments of the present invention will be more apparent from the following detailed description taken in conjunction with the accompanying drawings, in which:
FIG. 1a is a diagram illustrating a system for establishing a service session between a seeker device and an advertiser device in a wireless peer-to-peer (P2P) network, according to an embodiment of the present invention;
FIG. 1b is a signaling diagram illustrating a connection between the seeker device and the advertiser device in the wireless P2P network, according to an embodiment of the present invention;
FIG. 2 is a signaling diagram illustrating a service session between the seeker device and the advertiser device when one or more services supported by the advertiser device are exchanged during Near Field Communication (NFC) data exchange, according to an embodiment of the present invention;
FIG. 3 is a signaling diagram illustrating a service session between the seeker device and the advertiser device in the wireless P2P network, according to an embodiment of the present invention;
FIG. 4 is a signaling diagram illustrating a service session between the seeker device and the advertiser device in the wireless P2P network, according to an embodiment of the present invention;
FIG. 5 is a diagram illustrating service discovery information being exchanged between the seeker device and the advertiser device during NFC data exchange, according to an embodiment of the present invention;
FIG. 6 is a diagram illustrating an operation for discovering a service by the advertiser device using the service intent request received from the seeker device, according to an embodiment of the present invention;
FIG. 7 is a diagram illustrating an operation for discovering a service by the advertiser device using multiple service intent requests received from the seeker device, according to an embodiment of the present invention;
FIG. 8 is a diagram illustrating an operation for discovering the available services, according to an embodiment of the present invention;
FIG. 9 is a diagram illustrating a service session discovery operation, according to an embodiment of the present invention;
FIG. 10 is a signaling diagram illustrating a service session between the seeker device and the advertiser device in the wireless P2P network, according to an embodiment of the present invention;
FIG. 11 is a signaling diagram illustrating a service session between the seeker device and the advertiser device in the wireless P2P network, according to an embodiment of the present invention;
FIG. 12 is a flowchart illustrating a method for establishing a service session between the seeker device and the advertiser device in the wireless P2P network, according to an embodiment of the present invention;
FIG. 13 is a flowchart illustrating a method for establishing a service session by automatically forming a group between the seeker device and the advertiser device, according to an embodiment of the present invention;
FIG. 14 is a diagram illustrating a system for automatically establishing a service session between the seeker device and the advertiser device, according to an embodiment of the present invention;
FIG. 15 is a diagram illustrating a system for establishing a service session between the seeker device and the advertiser device, according to an embodiment of the present invention;
FIG. 16 is a diagram illustrating a system for establishing a service session between the seeker device and the advertiser device, according to an embodiment of the present invention;
FIG. 17 is a diagram illustrating a system for establishing the service session between the seeker device and the advertiser device, according to an embodiment of the present invention; and
FIG. 18 is a diagram illustrating a computing environment implementing a method and system for establishing a service session between the seeker device and the advertiser device in the wireless P2P network, according to an embodiment of the present invention.

### Mode for the Invention

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. Also, the various embodiments described herein are not necessarily mutually exclusive, as some embodiments can be combined with one or more other embodiments to form new embodiments.

The term "or" as used herein, refers to a non-exclusive or, unless otherwise indicated. The examples used herein are intended merely to facilitate an understanding of ways in which the embodiments herein can be practiced and to further enable those skilled in the art to practice the embodiments herein. Accordingly, the examples should not be construed as limiting the scope of the embodiments herein.

The words "seeker device" and "seeker" are used interchangeably throughput the description.

The words "advertiser device" and "advertiser" are used interchangeably throughout the description.

The embodiments described herein provide a method and system for establishing a service session in a wireless peer-to-peer (P2P) network. The method includes sending intent from a seeker device to an advertiser device during an NFC data exchange between the seeker device and the advertiser device, where the intent corresponds to one or more services and one or more parameters. Further, the method includes establishing the service session between the seeker device and the advertiser device when the services are supported by the advertiser device.

The method includes identifying the services supported by the advertiser device based on the intent.

The method includes establishing the service session after identifying the services supported by the advertiser device based on the intent.

The parameter can be a connection capability, an operating channel, a listen channel, Service Set identification (SSID) average, a password or a PIN, Internet Protocol (IP) address of the advertiser device, and IP address of the seeker device.

The method includes automatically forming a group between the seeker device and the advertiser device based on the connection capability or the operating channel or the SSID average or the combination of the same exchanged between the seeker device and the advertiser device during the NFC data exchange.

The method includes fixing a channel frequency between the seeker device and the advertiser device based on the listen channel exchanged between the seeker device and the advertiser device during the NFC data exchange.

Unlike conventional systems, intent can be exchanged between the seeker device and the advertiser device which can enable the seeker device and the advertiser device to negotiate the one or more supported services by using the NFC based service invocation and service negotiation.

Unlike conventional systems, the connection experience for the user can be improved. Also, the methods and systems described herein optimize service discovery, service invocation, and direct connection procedures, thereby improving a connection experience for the user.

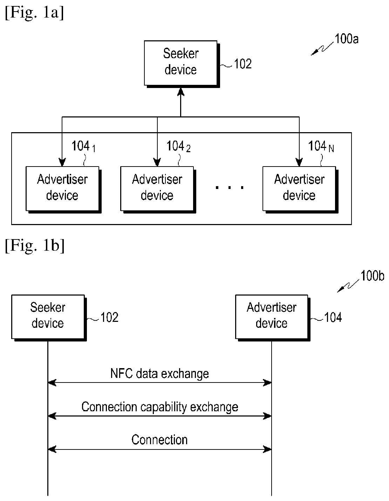

FIG. 1a is a block diagram illustrating a system 100a for establishing a service session between a seeker device and an advertiser device, according to an em-bodimentof the present invention. The system 100a includes a seeker device 102 and a plurality of advertiser devices 1041-N (hereinafter referred to as the advertiser device 104).The seeker device 102 can be, for example, but not limited to a laptop, a mobile phone, a smart phone, a Personal Digital Assistant (PDA), a tablet, a phablet, or any other communication device.

The advertiser device 104 can be, for example, but not limited to a mobile phone, a smartphone, a Television, a Stereo player, a printer, a digital broadcasting player, a Personal Digital Assistants (PDA), a media player, a display device, a mobile game console, and a digital camera, or any other electronic device.

The seeker device 102 includes appropriate interfaces to directly or indirectly communicate with the advertiser device 104, and with various other devices.

Initially, the seeker device 102 is connected to the advertiser device 104 to initiate an NFC data exchange between the seeker device 102 and the advertiser device 104. Further, the seeker device 102 can be configured to send the intent to the advertiser device 104 during the NFC data exchange. The intent corresponds to the services supported by the advertiser device 104.

The services can be, for example, but not limited to a send service, a play service, a display service, a print service, a chat service, a beam service, or the like.

The intent can also correspond to the parameters, e.g., a connection capability, an operating channel, a listening channel, an SSID average, a password or a PIN, an IP address of the advertiser device 104, and an IP address of the seeker device 102.

A channel frequency between the seeker device 102 and the advertiser device 104 can be fixed based on the listening channel exchanged between the seeker device 102 and the advertiser device 104 during the NFC data exchange. After receiving the intent, the advertiser device 104 can be configured to identify the services supported by the advertiser device 104. Further, the seeker device 102 can be configured to receive the matched intent from the advertiser device 104.

The matched intent corresponds to the supported service and an advertisement identifier (i.e., advertisement_ID). The group is formed between the seeker device 102 and the advertiser device 104 based on a connection capability or the operating channel or the SSID average or the combination thereof.

After receiving the matched intent, the seeker device 102 can be configured to establish the service session between the seeker device 102 and the advertiser device 104 when the service supported by the advertiser device 104 is identified.

The advertiser device 104 can be configured to establish the service session between the seeker device 102 and the advertiser device 104 when the service supported by the advertiser device 104 is identified.

Unlike conventional systems, the connection between the seeker device 102 and the advertiser device 104 can be optimized by fixing the channel frequency and automatically forming the group between the seeker device 102 and the advertiser device 104; thus, increasing user experience and efficiency.

FIG. 1a shows a limited overview of the system 100a but, it is to be understood that embodiments of the present invention are not limited thereto. Further, the system 100a can include any number of electronic devices along with other hardware or software components that are in operative communication with each other. For example, the component can be, but not limited to, a process running in a controller or processor, an object, an executable process, a thread of execution, a program, or a computer. By way of illustration, both an application running on a device and the device itself can be a component.

FIG. 1b is a diagram illustrating a system for establishing a service session between a seeker device 102 and an advertiser device 104 in a wireless peer-to-peer (P2P) network, according to an embodiment of the present invention. The signaling sequence depicts communication between the seeker device 102 and the advertiser device 104.

Initially, the seeker device 102 is connected to the advertiser device 104 for initiating the NFC data exchange between the seeker device 102 and the advertiser device 104. The channel frequency between the seeker device 102 and the advertiser device 104 is fixed based on the listening channel exchanged during the NFC data exchange.

The connection capability information is exchanged between the seeker device 102 and the advertiser device 104. The connection is established between the seeker device 102 and the advertiser device 104. The functionalities of the seeker device 102 and the advertiser device 104 were explained in conjunction with the FIG. 1a.

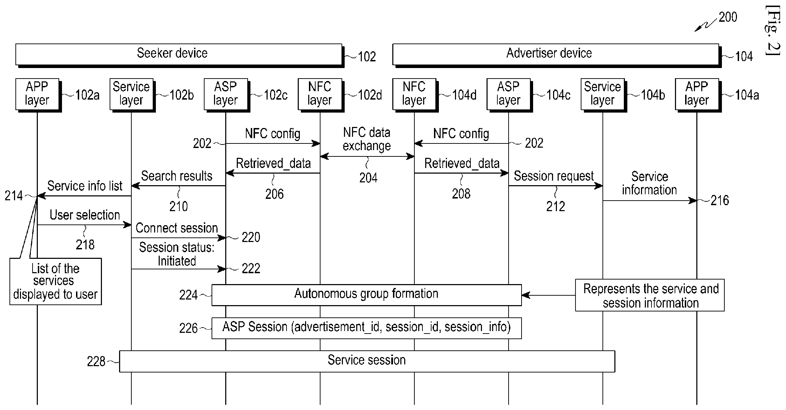

FIG. 2 is a signaling diagram illustrating a service session between the seeker device 102 and the advertiser device 104 when one or more services supported by the advertiser device are exchanged during NFC data exchange, according to an embodiment of the present invention. The seeker device 102 includes multiple layers, such as an application (APP) layer 102a, a service layer 102b, an ASP layer 102c, and an NFC layer 102d. Similarly, the advertiser device 104 includes multiple layers, such as an application (APP) layer 104a, a service layer 104b, an ASP layer 104c, and an NFC layer 104d. The details of the layers below the NFC layer, such as the physical (PHY) layers, are omitted for brevity. The signaling sequence depicts communication between the seeker device 102 and the advertiser device 104.

Initially, at step 202, the ASP layer 104c configures the supported services and the parameters in a configuration message and sends the configuration message to the NFC layer 102d. Simultaneously, the ASP layer 102c configures the services and the parameters in a configuration message and sends the configuration message to the NFC layer 102d. The service can be a send service, a play service, a display service, a print service, a chat service, or the like. The one or more parameters can be a connection capability, an operating channel, a listening channel, an SSID average, a password or a PIN, an IP address of the advertiser device 104, and an IP address of the seeker device 102.

At step 204, the seeker device 102 is connected to the advertiser device 104 for initiating the NFC data exchange between the NFC layer 102d of the seeker device 102 and the NFC layer 104d of the advertiser device 104. The NFC layer 102d and the NFC layer 104d exchange the intent during the NFC data exchange.

The channel frequency between the seeker device 102 and the advertiser device 104 is fixed based on the listening channel exchanged during the NFC data exchange.

The NFC layer 104d sends the configuration message including the matched intent corresponding to the supported services to the NFC layer 102d during the NFC data exchange.

At step 206, the NFC layer 102d receives the configuration message during an NFC connection from the NFC layer 104d. After receiving the configuration message, the NFC layer 102d sends the intent in the configuration message to the ASP layer 102c, which is referred to as a "Retrieved_data event."

At step 208, after receiving the configuration message including the intent corresponding to the parameters from the NFC layer 102d, the NFC layer 104d sends the intent to the ASP layer 104c which is referred to as a "Retrieved_data event." The advertiser device 104 reads the intent which is received from the ASP layer 104c. The intent is then included in the NFC response message and uses Simple NFC Data Exchange Format Exchange Protocol (SNEP) protocol to carry the information to the seeker device 102.

At step 210, the ASP layer 102c retrieves the intent and identifies all the services supported by the ASP layer 102c. Further, the ASP layer 102c sends the services to the service layer 102b as an event referred to as "Search_Results".

At step 212, after receiving the configuration message from the NFC layer 104d, the ASP layer 104c sends the session request to the service layer 104b.

At step 214, after receiving the "Search_Results, the service layer 102b sends the intent corresponding to the services to the APP layer 102a.

At step 216, after receiving the session request from the ASP layer 104c, the service layer 104b sends the service information to the APP layer 104a.

At step 218, after receiving the one or more services, the APP layer 102a displays the services to the user of the seeker device 102 on a User Interface (UI).

At step 220, the user of the seeker device 102 selects a particular service from the services supported by the advertiser device 104. The APP layer 102a sends the selected service to the service layer 102b to invoke the selected services accordingly. After receiving the user selected service, the service layer 102b sends a request to the ASP layer 102c to connect the service session between the seeker device 102 and the advertiser device 104.

At step 222, the ASP layer 102c follows existing techniques to initiate the service session between the seeker device 102 and the advertiser device 104.

At step 224, the group between the seeker device 102 and the advertiser device 104 is automatically formed based on the intent corresponding to the connection capability or the operating channel or the SSID average or the combination thereof.

At step 226, after the autonomous group formation is completed, the ASP session is initiated. The ASP session represents the service and the session information. The ASP-session is a logical link between the ASP of one device and the ASP of another device. A P2P connection between the peer devices is required to start an ASP-Session. The ASP can setup multiple ASP-Sessions between the two devices. Each ASP-Session is identified by a session identifier assigned by the ASP requesting the ASP-Session.

At step 228, after the ASP session is initiated, the service session is established between the seeker device 102 and the advertiser device 104.

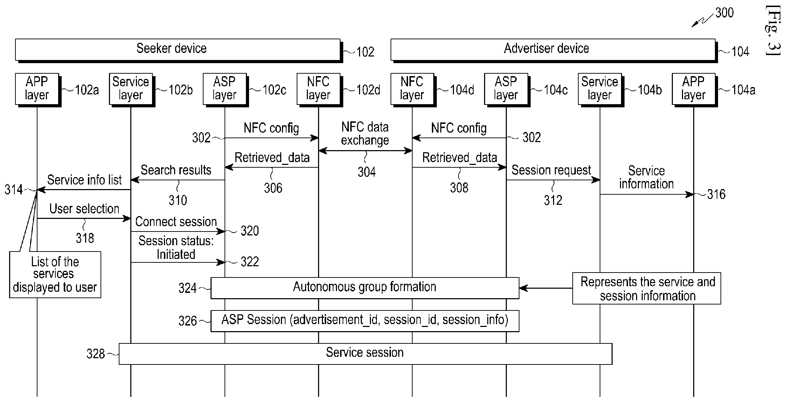

FIG. 3 is a signaling diagram illustrating a service session between the seeker device 102 and the advertiser device 104 in the wireless P2P network, according to an embodiment of the present invention. The signaling sequence depicts communication between the seeker device 102 and the advertiser device 104.

Step 302 is the same as step 202 of the FIG. 2 and is not described herein.

At step 304, the seeker device 102 is connected to the advertiser device 104 for initiating the NFC data exchange between the NFC layer 102d and the NFC layer 104d. The NFC layer 102d sends the intent to the NFC layer 104d during the NFC data exchange.

The intent corresponds to the service and/or to the parameters. For example, the intent sent by the seeker device 102 to the advertiser device 104 during NFC data exchange can include the following parameters:
(6 octet service hashes 6 bytes, advertisement_id 4 bytes);
Connection capability 1 byte;
Operating channel 2/5 bytes;
Listen channel 2/5 bytes; and
SSID average (10-12 bytes).

The channel frequency between the seeker device 102 and the advertiser device 104 is fixed based on the intent corresponding to the listen channel exchanged during the NFC data exchange.

After receiving the service, the NFC layer 104d identifies whether the advertiser device 104 supports the requested service by the user of the seeker device 102. After identifying the requested service, the NFC layer 104d sends the configuration message including the matched intent corresponding to the requested service to the NFC layer 102d during the NFC data exchange.

For example, the intent sent by the advertiser device 104 to the seeker device 102 during NFC data exchange can include the following parameters:
(6 octet service hashes6 bytes, advertisement_id 4 bytes);
Connection capability 1 byte;
Operating channel 2/5 bytes;
Listen channel 2/5 bytes; and
SSID average (10-12 bytes).

Steps 306 and 308 are the same as steps 206 and 208 of the FIG. 2 and are not described herein.

At step 310, the ASP layer 102c retrieves the information of the supported service received from the advertiser device 104. Further, the ASP layer 102c sends the supported service to the service layer 102b as an event called "Search_Results".

Step 312 is the same as step 212 of the FIG. 2 and is not described herein.

At step 314, after receiving the "Search_Result, the service layer 102b sends the intent including the service to the APP layer 102a.

Step 316 is the same as step 216 of the FIG. 2 and is not described herein.

At step 318, after receiving the service, the APP layer 102a displays the service to the user of the seeker device 102 on the UI.

At step 320, the APP layer 102a sends the service to the service layer 102b to automatically invoke the selected services accordingly. On receiving the service, the service layer 102b sends a request to the ASP layer 102c to connect the service session between the seeker device 102 and the advertiser device 104.

Steps 322, 324, 326, and 328 are the same as steps 222, 224, 226, and 228 of the FIG. 2 and are not described herein.

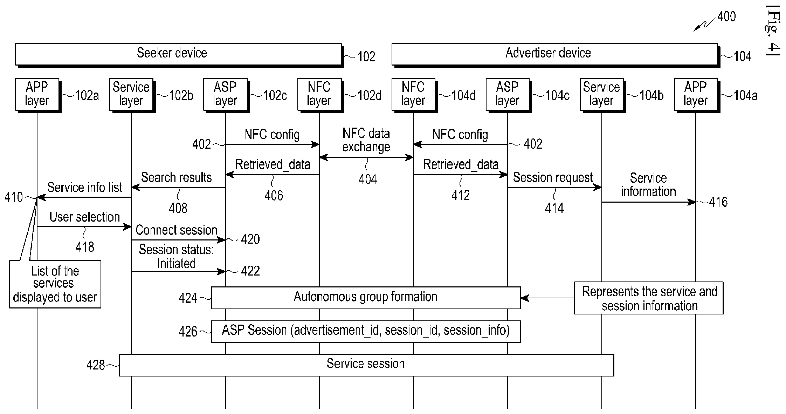

FIG. 4 is a signaling diagram illustrating a service session between the seeker device 102 and the advertiser device 104 in the wireless P2P network, according to an embodiment of the present invention. The signaling sequence depicts communication between the seeker device 102 and the advertiser device 104.

Step 402 is the same as step 202 of the FIG. 2 and is not described herein.

At step 404, the seeker device 102 is connected to the advertiser device 104 for initiating the NFC data exchange between the NFC layer 102d and the NFC layer 104d. The NFC layer 102d sends the intent to the NFC layer 104d during the NFC data exchange.

The intent corresponds to multiple services (for example, Service-A, Service-B, and Service-C) and/or to the parameters. For example, the intent sent by the seeker device 102 to the advertiser device 104 during NFC data exchange can include the following parameters:
(6 octet service hashes6 bytes, advertisement_id 4 bytes) * N (multiple services);
Connection capability 1 byte;
Operating channel 2/5 bytes;
Listen channel 2/5 bytes; and
SSID average (10-12 bytes).

The channel frequency between the seeker device 102 and the advertiser device 104 is fixed based on the intent corresponding to the listening channel exchanged during the NFC data exchange.

After receiving the multiple services, the NFC layer 104d identifies the services from the multiple services supported by the advertiser device 104. After identifying the supported services from the multiple services, the NFC layer 104d sends the configuration message including the matched intent corresponding to the supported services to the NFC layer 102d during the NFC data exchange.

For example, the advertiser device 104 may support the Service-A and the Service-B from the multiple services (i.e., Service-A, Service-B, Service-C). The advertiser device 104 may support only the Service-A from the multiple services (i.e., Service-A, Service-B, Service-C).

For example, the intent sent by the advertiser device 104 to the seeker device 102 during NFC data exchange can include the following parameters:
(6 octet service hashes6 bytes, advertisement_id 4 bytes) *N;
Connection capability 1 byte;
Operating channel 2/5 bytes;
Listen channel 2/5 bytes; and
SSID average (10-12 bytes).

Steps 406 and 408 are the same as steps 206 and 208 of the FIG. 2 and are not described herein.

At step 410, the ASP layer 102c retrieves the information of the supported services received from the advertiser device 104. Further, the ASP layer 102c sends the supported services to the service layer 102b as an event called "Search_Results".

Step 412 is the same as step 212 of the FIG. 2 and is not described herein.

At step 414, after receiving the "Search_Results, the service layer 102b sends the information including the supported services to the APP layer 102a.

Step 416 is the same as step 216 of the FIG. 2 and is not described herein.

At step 418, after receiving the supported services, the APP layer 102a displays the services to the user of the seeker device 102 on the UI.

At step 420, the user of the seeker device 102 selects a particular service from the supported services. The APP layer 102a sends the selected service to the service layer 102b to invoke the selected services accordingly. After receiving the user selected service, the service layer 102b sends a request to the ASP layer 102c to establish the service session between the seeker device 102 and the advertiser device 104.

Steps 422, 424, 426, and 428 are the same as steps 222, 224, 226, and 228 of the FIG. 2 and are not described herein.

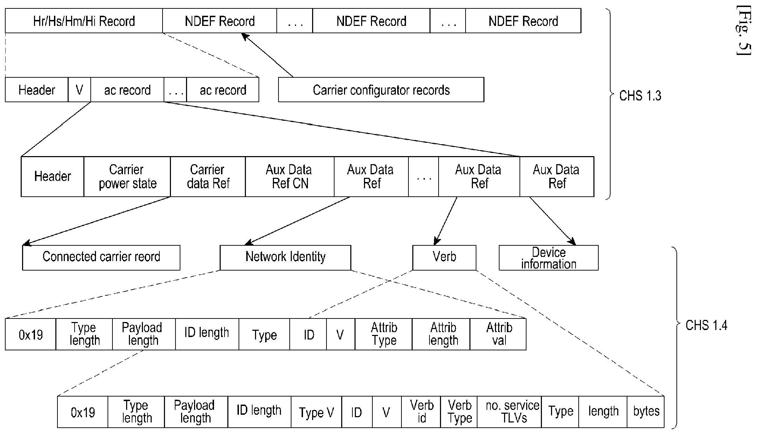

FIG. 5 is a diagram illustrating service discovery information being exchanged between the seeker device and the advertiser device during NFC data exchange, according to an embodiment of the present invention.

The connection handover specification defines the message exchanges during the NFC data exchange, which allows the seeker device 102 and the advertiser device 104 to trigger an alternate carrier ("ac") connection. The "ac" records completely describe the carrier information to bootstrap the connection over the alternate carrier. The connected carrier identifies the existing connection which is active. The network identity describes the additional network information associated with the alternate carrier, e.g., IP address. The "verb" NFC Data Exchange Format (NDEF) records describe the service information.

Further, the handover message can carry one or more alternate carriers, and each of the alternate carrier records can carry one or more auxiliary data. The verb record, network identity, and the device information are the auxiliary records for the alternate carrier. The connected carrier is the carrier configuration record which represents the available existing connection.

### ASP Service Discovery Information

The verb record is used to carry the service discovery information for the services running over the ASP layer. The format for the verb NDEF auxiliary record is shown in the FIG. 5. The main attributes of the verb messages are given in the below Table 1 as follows:

### Table 1

**[Table 1]**

| Fields | Description |
|---|---|
| Verb ID | ID is used to identify the service, the values for the WFDS defined services are defined in the connection handover specification 1.4.For a third party application or the service based on the enable service of the WFDS value is set to "0XFF" |
| Verb Type | Verb Type indicates a request type |
| No. of Service TLVs | No. of service information TLV (i.e., for each service; one service TLV is present) |
| Type | Type of service attributes - set to OUI for Wi-Fi Alliance 3 Bytes, 4th byte reserved for the future extension |
| Length | Length of the service TLVs. Multiple of 10 bytes (i.e., service hash and advertisement ID) |
| Bytes | Service TLVs tuples (service hash and service advertisement). For service available and service selected record: Bytes: [service hash: service advertisement] (0-n)For service requestor: Bytes: [service hash] (0-n) |

### Verb Type Usage is shown Table 2

### Table 2

**[Table 2]**

| Verb Type | NDEF Requestor | NDEF Selector | Usage |
|---|---|---|---|
| Requested | Included in the NDEF Request | - | Requesting for a particular service or instance of the service or no. of services. Includes the verb auxiliary data includes one or more service information TLVs, service intent sent by the seeker device |
| Selected | - | Included in the selector NDEF | In NDEF selector message in response of the service intent |
| Available | - | Included in the selector NDEF | In the NDEF selector message indicating all the supported services by the advertiser device |

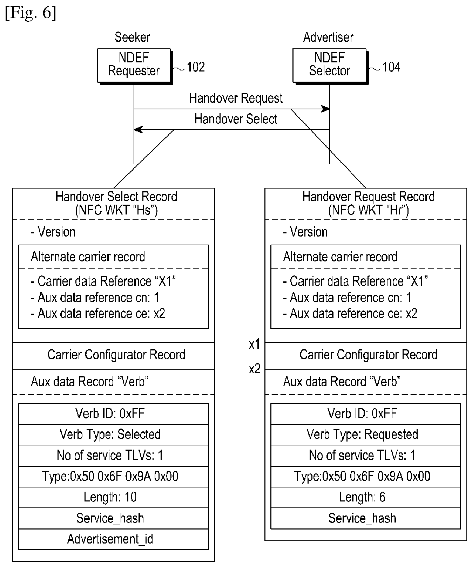

FIG. 6 is a diagram illustrating an operation for discovering a service by the advertiser device using the service intent request received from the seeker device, according to an embodiment of the present invention.

The handover request sent by the NDEF requester (i.e., the seeker role supports the ASP) can include the following parameters:
P2P Wi-Fi Direct Carrier configurator record;
Auxiliary data record called "verb";
Verb ID set to 0xFF for vendor specific verb definition;
Verb Type set to "Requested";
No. of service TLVs 1;
Type set to OUI of Wi-Fi Alliance;
Length field set to 6; and
6 bytes of the service hash value for the service which is requested by the seeker.

Further, the NDEF Select sends the NDEF Select Record (i.e., the advertiser role supports the ASP), and the record can include the following parameters:
P2P Wi-Fi Direct Carrier configurator record selected alternate carrier record;
If the service is supported, and the information is available, the record includes the auxiliary data record called "verb";
Verb ID set to 0xFF for vendor specific verb definition;
Verb Type set to "Selected";
No. of service TLVs 1;
Type set to OUI of Wi-Fi Alliance;
Length field set to 10;
6 bytes of the service hash value for the service supported by the advertiser; and
4 bytes of the advertisement ID (i.e., service instance).

Further, the information received in the handover select record confirms the availability of the service.

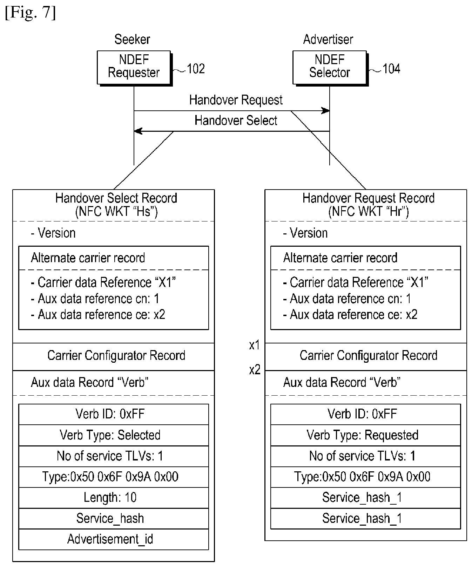

FIG. 7 is a diagram illustrating an operation for discovering a service by the advertiser device using multiple service intent requests received from the seeker device, according to an embodiment of the present invention. The handover request sent by the NDEF requester (i.e., the seeker role supports the ASP) can include the following parameters:
P2P Wi-Fi Direct Carrier configurator record;
Auxiliary data record called "verb";
Verb ID set to 0xFF for vendor specific verb definition;
Verb Type set to "Requested";
No. of service TLVs 1;
Type set to OUI of Wi-Fi Alliance;
Length field set to N (No. of services requested by the seeker) * 6; and
6 bytes of the service hash value for the service which is requested by the seeker.

Further, the NDEF select sends the NDEF select record (i.e., the advertiser role supports the ASP), and the record can include the following parameters:
P2P Wi-Fi Direct Carrier configurator record selected alternate carrier record;
If the service is supported and the information is available, the record includes the auxiliary data record called "verb";
Verb ID set to 0xFF for vendor specific verb definition;
Verb Type set to "Selected";
No. of service TLVs 1;
Type set to OUI of Wi-Fi Alliance ;
Length field set to 10;
6 bytes of the service hash value for the service supported by the advertiser device; and
4 bytes of the advertisement ID.

Further, the information received in the handover select record confirms the availability of the one or more services which are a subset of the service hashes received.

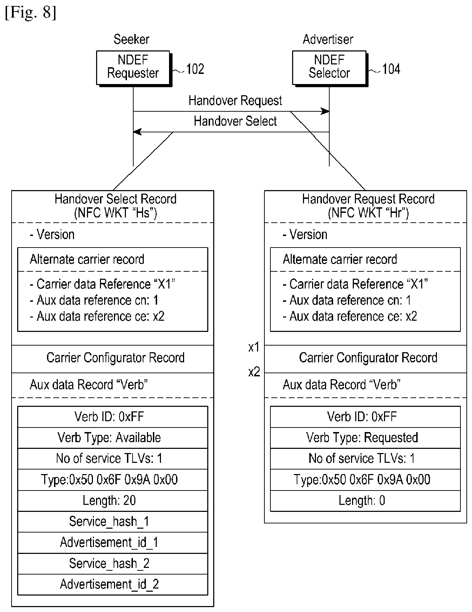

FIG. 8 is a diagram illustrating an operation for discovering the available services, according to an embodiment of the present invention. The handover request sent by the NDEF requester (i.e., the seeker role supports the ASP) can include the following parameters:
P2P Wi-Fi Direct Carrier configurator record;
Auxiliary data record called "verb";
Verb ID set to 0xFF for vendor specific verb definition;
Verb Type set to "Requested";
No. of service TLVs 1;
Type set to OUI of Wi-Fi Alliance; and
Length field set to 0

Further, the NDEF select sends the NDEF select record (i.e., the advertiser role supports the ASP), and the record can include the following parameters:
P2P Wi-Fi Direct Carrier configurator record selected alternate carrier record;
If the service is supported and the information is available, the record includes the auxiliary data record called "verb";
Verb ID set to 0xFF for vendor specific verb definition;
Verb Type set to "Selected";
No. of service TLVs 1;
Type set to OUI of Wi-Fi Alliance ;
Length field set to 20; and
2*[6 bytes of the service hash value for the service supported by the advertiser device, 4 bytes of the advertisement id].

Further, the information received in the handover select record receives the available services in the advertiser.

### NDEF Selector lack of information

The advertiser may not have the information about the supported services over the Wi-Fi Direct, which can be described using the verb message using setting the Type field's 4th byte set to 0x01, which informs the ASP of the seeker that the service information is not available. When the advertiser lacks the information about the service information, the verb auxiliary record can include the following parameters to indicate the lack of information at the advertiser side:
If the information is not available, the record includes the auxiliary data record called the "verb";
Verb ID set to 0xFF for vendor specific verb definition;
Verb Type set to "Available";
No. of service TLVs 1;
Type set to OUI of Wi-Fi Alliance 0x50 0x6F 0x9A 0x01; and
Length field set to 0.

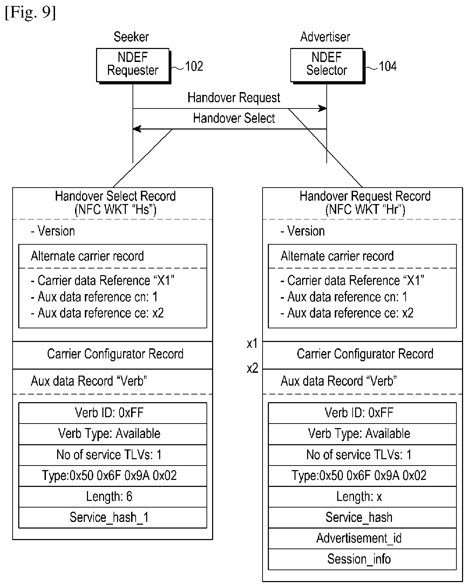

FIG. 9 is a diagram illustrating a service session discovery operation, according to an embodiment of the present invention. The NDEF selector can request to join the NDEF selector for an existing ongoing session using NFC and can allow a service discovery mechanism. The handover request sent by the NDEF requester can include the following parameters:
P2P Wi-Fi Direct Carrier configurator record;
Auxiliary data record called "verb";
Verb ID set to 0xFF for vendor specific verb definition;
Verb Type set to "Available";
No. of service TLVs 1;
Type set to OUI of Wi-Fi Alliance;
Length field set to X;
Service_hash;
Advertisement_id (optional); and
Session_info (service specific session information) e.g., 1 byte session identifier.

Further, the NDEF select sends the NDEF select record (i.e., the advertiser role supports the ASP), and the record can include the following parameters:
P2P Wi-Fi Direct Carrier configurator record selected alternate carrier record;
If the service is supported and the information is available, the record includes auxiliary data record called "verb";
Verb ID set to 0xFF for vendor specific verb definition;
Verb type set to "Selected";
No. of service TLVs 1;
Type set to OUI of Wi-Fi Alliance;
Length field set to 6/10;
Service_hash;and
Advertisement_id.

### Connection handover using NFC:

The P2P specification defines the NFC handover mechanism to trigger the Wi-Fi P2P connections between two devices. The Wi-Fi P2P Carrier configurator record is used as alternate carrier record for bootstrapping of the P2P connection in order to initiate the new P2P connection for the service session. The handover request record includes the Wi-Fi P2P Carrier configure record in the case where there is no existing connection exists between two device or the device may initiate a new connection for the requested service session. The handover select record includes the W-Fi P2P carrier configures record if there is compatible service matches. The P2P Wi-Fi Carrier configurator record includes the following attributes which can be used in order to initiate the P2P connection.

### Table 3

**[Table 3]**

| ID | Name | Description |
|---|---|---|
| 0x30 (TBD) | P2P_Version | Describes the level of the P2P, the value is set to major version and minor version [Major Version] [Minor Version] to indicate the level of the P2P implementation. The ASP can define the additional version to indicate the ASP defined P2P version |
| 0x27 | Feature Capability | Describes the ASP feature capability information |
| 0x23 | Connection capability info | Describes the connection preference |
| 0x28 | Persistent group info | Describes the persistent group information |

Further, the alternate carrier describes the bootstrap information P2P connection. The alternate carrier includes an auxiliary record called network identity as described in the specification NFC 1.4. The following attributes will be used from the specification NFC 1.4.

### Table 4

**[Table 4]**

| Attribute name | Handover Request type | Description |
|---|---|---|
| IPv4 Attribute | Hr | Indicates the IP address of the handover request.This may be included in the case of initiating in the persistent. In the case of the GO device this will be a GO IP address |
| IPv4 Attribute | Hs | Indicates the IP address of the handover selector device. In the case of the GO device this will be a GO IP address. |
| IPv6 | Hr/Hs | IP address of the device |

This specification defines the following new attributes which are specific for a service.

### Table 5

**[Table 5]**

| Attribute name | Handover request type | Description |
|---|---|---|
| Traget_IPv4_address | Hr/Hs | Indicates the IP address of the target device. This is to assign the static IP address for the target device. This will be applicable for the persistent group and if the requestor device is a GO of that group.The handover select message includes this message in case the handover select message is a GO, and assigns the IP for the handover requestor device |
| Target_IPv6_addres Attribute | Hr/Hs | Indicates the IP address of the target device. This is to assign the static IP address for the target device. This will be applicable for the persistent group and if the requestor device is a GO of that group. The handover select message includes this message in case the handover select message is a GO, and assigns the IP for the handover requestor device |
| Service_network_infor mation | Hr/Hs | Addition service specific information required as per the service |

### Attribute structure

The attribute structure is shown below in Table 6, Table 7, and Table 8:

### Table 6

**[Table 6]**

| Length | Value | Description |
|---|---|---|
| 1 | 0x09 (TBD) | Attribute type: Target_IPv4_address |
| 1 | 0x04 | Attribute length 4 octet |
| 4 | IP address | IP address |

### Table 7

**[Table 7]**

| Length | Value | Description |
|---|---|---|
| 1 | 0x0A (TBD) | Attribute type: Target_IPv6_address |
| 1 | 0x10 | Attribute length |
| 16 | IPv6 address | IPv6 address |

### Table 8

**[Table 8]**

| Length | Value | Description |
|---|---|---|
| 1 | 0x0B (TBD) | Attribute type: service information |
| 1 | 0-255 | Attribute length |
| 16 | Service specific information | Service defined information |

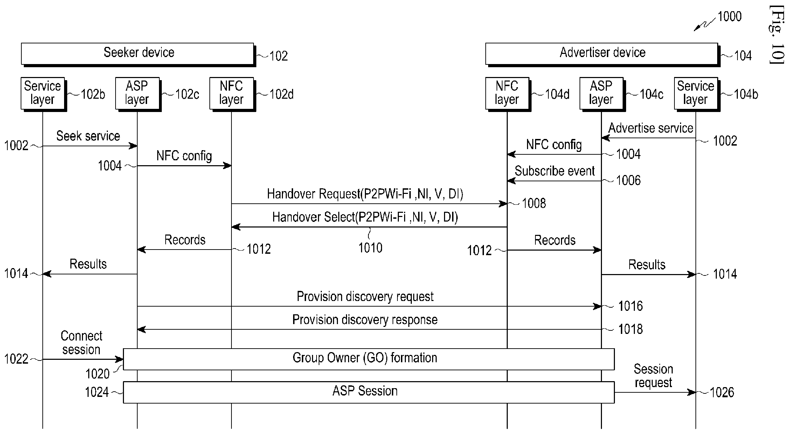

FIG. 10 is a signaling diagram illustrating a service session between the seeker device 102 and the advertiser device 104 in the wireless P2P network, according to an embodiment of the present invention. In an embodiment, the seeker device 102 includes multiple layers, such as the service layer 102b, the ASP layer 102c, and the NFC layer 102d. Similarly, the advertiser device 104 includes multiple layers, such as the service layer 104b, the ASP layer 104c, and the NFC layer 104d. The details of the layers below the NFC layer, such as the physical (PHY) layers, are omitted for brevity. The signaling sequence depicts communication between the seeker device 102 and the advertiser device 104.

At step 1002, the seeker device 102 initiates the service discovery over NFC, which triggers a seek service request to be sent to the ASP layer 102c from the service layer 102b. The seek service request can include one or more service hashes. Simultaneously, the service layer 104b configures the ASP layer 104c with the list of services supported by the advertiser device 104.

After receiving the seek service request from the service layer 102b, at step 1004, the ASP layer 102c configures the NFC layer 102d with handover records based on the seek service request. Simultaneously, after receiving the list of services from the service layer 104b, the ASP layer 104c configures the NFC layer 104d with the service or set of services information by configuring the NDEF records. The handover request can include, for example, the following parameters:
Alternate carrier record set to Wi-Fi P2P Carrier configuration record as defined in the specification P2P1.5.;
May include the P2P_Version attribute which is set to "0x02 0x00";
May include the Feature Capability attribute, which is used to exchange the ASP transport capability parameter as defined by the ASP core specification;
May include the connection capability information, which is used to trigger the Auto GO or Persistent GO;
May include the persistent group information to describe the group information;
May include the auxiliary record of type "Verb" along with the service TLVs as identified by the section 3.2.5.;
Service may be identified by the set of service hashes; and
May include the device information and auxiliary information as described in the specification NFC 1.4. However, the auxiliary record "NI" will not be present if underlying P2P topology is not known to the ASP layer or there is no existing connection.

At step 1006, the ASP layer 104c sends the subscribe event to the NFC layer 104d. At step 1008, the NFC layer 102d of the seeker device 102 sends the handover request message to the NFC layer 104d of the advertiser device when the seeker device 102 is connected to the advertiser device 104. The handover request message includes a NDEF record configured as described above, for example:
Verb including the service hashes which will further include the scenarios; and
P2P Wi-Fi alternate Carrier configurator record.

After receiving the handover request message from the seeker device 102, at step 1010, the advertiser device 104 determines the supported services as per the verb records requested in the NDEF records, and the NFC layer 104d sends the handover select message including the supported services (i.e., which will be a subset of the services supported) to the NFC layer 102d. The handover select message includes following records as described below:
Alternate carrier record: P2P Wi-Fi carrier configurator record; and
Verb auxiliary record includes the supported services (i.e., a subset of service hashes in the handover request).

At step 1012, the NFC layer 102d sends the received records to the ASP layer 102c. Simultaneously, the NFC layer 104d sends the records to the ASP layer 104c. After receiving the records, at step 1014, the ASP layer 102c generates the "Search_Results" event including the set of NDEF records including the set of supported services. Further, the ASP layer 102c sends the generated results to the service layer 102b. Simultaneously, the ASP layer 104c sends the Search_Results including the service information to the service layer 104b.

At step 1016, the ASP layer 102c triggers the underlying connection using the received NDEF request and P2P attributes such as connection capabilities by sending a provision discovery request to the ASP layer 104c. After receiving the provision discovery request, the ASP layer 104c sends the provision discovery response to the ASP layer 102c. At step 1020, the GO is formed between the seeker device 102 and the advertiser device 104.

At step 1022, the service layer 102b of the seeker device 102 sends a connect session message including the service to be invoked to the ASP layer 102c. At step 1024, the ASP layer 102c triggers the ASP session initiation procedures with the advertiser device 104. At step 1026, the ASP layer 104c sends a session request message to the service layer 104b for establishing the session between the seeker device 102 and the advertiser device 104.

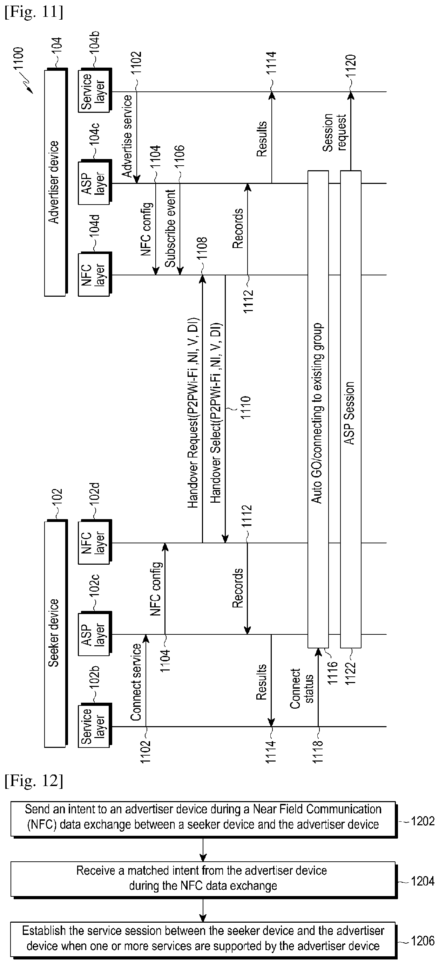

FIG. 11 is a signaling diagram illustrating a service session between the seeker device and the advertiser device in the wireless P2P network, according to an embodiment of the present invention. The seeker device 102 includes multiple layers, such as the service layer 102b, the ASP layer 102c, and the NFC layer 102d. Similarly, the advertiser device 104 includes multiple layers, such as the service layer 104b, the ASP layer 104c, and the NFC layer 104d. The details of the layers below the NFC layer, such as the physical (PHY) layers, are omitted for brevity. The signaling sequence depicts communication between the seeker device 102 and the advertiser device 104.

At step 1102, the seeker device 102 initiates the service discovery and connection over NFC, which triggers a connect service primitive to be sent to the ASP layer 102c from the service layer 102b. The connect service primitive can include one or more service hashes. Simultaneously, the service layer 104b configures the ASP layer 104c with the list of services information by the advertiser device 104.

After receiving the connect service primitive from the service layer 102b, at step 1104, the ASP layer 102c configures the NFC layer 102d with the handover records as per the connect service primitive. Simultaneously, after receiving the list of services from the service layer 104b, the ASP layer 104c configures the NFC layer 104d with the service or set of services information by configuring the NDEF records. The handover request can include the following parameters:
Alternate carrier record set to Wi-Fi P2P Carrier configuration record as defined in the specification P2P1.5.:
May include the P2P_Version attribute which is set to "0x02 0x00";
May include the Feature Capability attribute, which is used to exchange the ASP transport capability parameter as defined by the ASP core specification;
May include the connection capability information, which is used to trigger the Auto GO, in which case the connection capability information is set to GO;
May include the operating channel P2P attribute;
May include a device password and credential attributes as identified by the Specification P2P1.5;
May include the auxiliary record of type "Verb" along with the service TLVs as identified by the section 3.2.5.;
Service may be identified by the service hash;
May include auxiliary data record "NI" as described in the specification NFC 1.5;
May include the IPv4 attribute to indicate the IP address of the seeker device 102;
May include the Target_IPv4_Address attribute to assign the static IP address to the advertiser device 104;
May include the service_information attribute to describe the network parameter associated with the service (e.g. required port and protocol associated with the service); and
May include the device information and auxiliary information as described in the specification NFC 1.4.

At step 1106, the ASP layer 104c sends the subscribe event to the NFC layer 104d. At step 1108, the NFC layer 102d of the seeker device 102 sends the handover request message to the NFC layer 104d of the advertiser device when the seeker device 102 is connected to the advertiser device 104. The handover request message includes a NDEF record configured as described above, for example:
Verb including the service hashes which will further include the scenarios; and
P2P Wi-Fi alternate Carrier configurator record;
   After receiving the handover request message from the seeker device 102, at step 1110, the advertiser device 104 determines the supported services as per the verb records requested in the NDEF records and the NFC layer 104d sends the handover select message including the supported services (i.e., which will be a subset of the services supported) to the NFC layer 102d. The handover select message includes records as described below:
   Alternate carrier record: P2P Wi-Fi carrier configurator record;
   May include the connection capability attribute, which is set to a client; and
   Verb auxiliary record includes the supported services (i.e., a subset of service hashes in the handover request).

At step 1112, the NFC layer 102d sends the received records to the ASP layer 102c. After receiving the records, at step 1114, the ASP layer 102c generates the "Search_Results" event including the set of NDEF records including the set of supported services. Further, the ASP layer 102c sends the generated results to the service layer 102b.

At step 1116, the ASP layer 102c triggers the underlying connection and starts the auto GO procedure for the connection. Both the seeker device 102 and the advertiser device 104 start the auto GO procedure with the seeker device 102 set to GO. At step 1118, the ASP layer 102c notifies the connection status using the connection status attributes.

At step 1120, the ASP layer 104c sends the session request message to the service layer 104b for establishing the session between the seeker device 102 and the advertiser device 104. At step 1122, the ASP session is established between the seeker device 102 and the advertiser device 104.

FIG. 12 is a flowchart illustrating a method for establishing a service session between the seeker device and the advertiser device in the wireless P2P network, according to an embodiment of the present invention.

At step 1202, the method includes sending the intent to the advertiser device 104 during the NFC data exchange between the seeker device 102 and the advertiser device 104. The method allows the seeker device 102 to send the intent to the advertiser device 104 during the NFC data exchange. The intent corresponds to the services and/ or the parameters. The services can be, for example, the send service, the play service, the display service, the print service, the chat service, the beam service, or the like. The parameter can be a connection capability, an operating channel, the listening channel, the SSID average, the password or the PIN, the IP address of the advertiser device 104, and the IP address of the seeker device 102.

At step 1204, the method includes receiving the matched intent from the advertiser device 104 during the NFC data exchange. The method allows the seeker device 102 to receive the matched intent from the advertiser device 104 during the NFC data exchange.

At step 1206, the method includes establishing the service session between the seeker device 102 and the advertiser device 104 when the services are supported by the advertiser device 104.

The method allows the seeker device 102 to establish the service session between the seeker device 102 and the advertiser device 104 when the services are supported by the advertiser device 104.

The method allows the advertiser device 104 to establish the service session between the seeker device 102 and the advertiser device 104 when the services are supported by the advertiser device 104.

The various actions, acts, blocks, steps, and the like in the method of FIG. 12 may be performed in the order presented, in a different order or simultaneously. Further, some actions, acts, blocks, steps, and the like may be omitted, added, modified, skipped, and the like without departing from the scope of the invention.

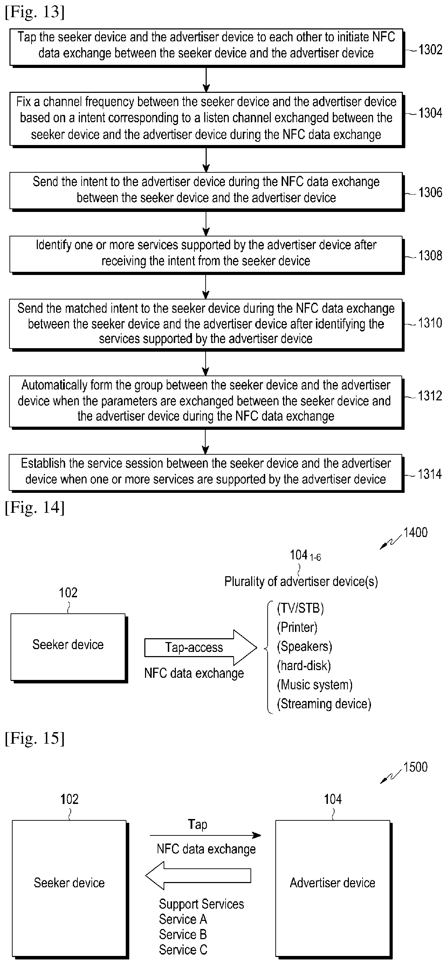

FIG. 13 is a flowchart illustrating a method for establishing a service session by automatically forming a group between the seeker device and the advertiser device, according to an embodiment of the present invention.

At step 1302, the method includes connecting the seeker device 102 and the advertiser device 104 to each other to initiate NFC data exchange between the seeker device 102 and the advertiser device 104. At step 1304, the method includes fixing the channel frequency between the seeker device 102 and the advertiser device 104 based on the listening channel exchanged between the seeker device 102 and the advertiser device 104 during the NFC data exchange.

At step 1306, the method includes sending the intent to the advertiser device 104 during the NFC data exchange between the seeker device 102 and the advertiser device 104. The method allows the seeker device 102 to send the intent to the advertiser device 104 during the NFC data exchange.

The intent corresponds to one or more services and/or one or more parameters. The services can be, for example, the send service, the play service, the display service, the print service, the chat service, the beam service, or the like. The parameters can be a connection capability, the operating channel, the listening channel, the SSID average, the password or the PIN, the IP address of the advertiser device 104, and the IP address of the seeker device 102.

At step 1308, the method includes identifying the services supported by the advertiser device 104 after receiving the intent from the seeker device 102. The method allows the advertiser device 104 to identify the services supported after receiving the intent from the seeker device 102.

At step 1310, the method includes sending the matched intent to the seeker device 102 during the NFC data exchange after identifying the services supported by the advertiser device 104. The method allows the advertiser device 104 to send the matched intent to the seeker device 102 during the NFC data exchange after identifying the services supported by the advertiser device 104.

At step 1312, the method includes automatically forming the group between the seeker device 102 and the advertiser device 104 when the connection capability, or the operating channel, or the SSID average, or the combination thereof are exchanged between the seeker device 102 and the advertiser device 104 during the NFC data exchange. At step 1314, the method includes establishing the service session between the seeker device 102 and the advertiser device 104 when the services are supported by the advertiser device 104. The method allows the seeker device 102 to establish the service session between the seeker device 102 and the advertiser device 104 when the services are supported by the advertiser device 104. The method allows the advertiser device 104 to establish the service session between the seeker device 102 and the advertiser device 104 when the services are supported by the advertiser device 104.

The various actions, acts, blocks, steps, and the like in the method of FIG. 13 may be performed in the order presented, in a different order or simultaneously. Further, some actions, acts, blocks, steps, and the like may be omitted, added, modified, skipped, and the like without departing from the scope of the invention.

FIG. 14 is a diagram illustrating a system 1400 for automatically establishing a service session between the seeker device and the advertiser device, according to an embodiment of the present invention. The system 1400 includes the seeker device 102 and a plurality of advertiser devices 104 with a fixed intent. As shown the FIG. 14, the plurality of advertiser devices 104₁₋₆ includes, but is not limited to, a Television (TV) or a set-top box (STB), a printer, a speaker, a hard-disk, a music system, and a streaming device.

Further, the seeker device 102 is connected to any one of the advertiser devices from among the plurality of advertiser devices 104₁₋₆ as shown in the FIG. 14 for initiating the NFC data exchange. The device type indicates the intent of the user associated with the seeker device 102. After detecting the device type by the seeker device 102, depending on the device type exchanged during the NFC data exchange, the P2P connection can be automatically established and the service related to the device type can be initiated as intended by the user of the seeker device 102. If the device type is the printer, then the printer will automatically start the print service when the seeker device 102 is connected to the printer.

FIG. 15 is a diagram illustrating a system 1500 for establishing a service session between the seeker device and the advertiser device, according to an embodiment of the present invention. The system 1500 includes the seeker device 102 and the advertiser device 104 with a variable intent (i.e., supporting one or more services).

The seeker device 102 is connected to the advertiser device 104 for initiating the NFC data exchange. After connecting the seeker device 102 to the advertiser device 104, the advertiser device 104 sends the list of services (i.e., Service A, Service B, and Service C) supported by the advertiser device 104 during the NFC data exchange in response to the connection to the seeker device 102. For example, the service A can be a print service, the service B can be a display service, and the service C can be a streaming service. The services supported by the advertiser device 104 are displayed as a popup message on a display screen of the seeker device 102. The user of the seeker device 102 can select the particular service or ignore the service to get connected over Wi-Fi direct. If the user selects the particular service (for example: service A) from the list of services on performing a gesture, the selected service (i.e., service A) will be invoked by the seeker device 102 by establishing the service session between the seeker device 102 and the advertiser device 104.

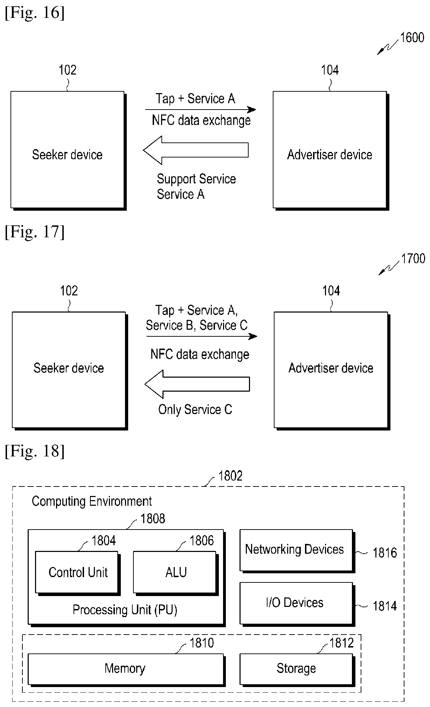

FIG. 16 is a diagram illustrating a system 1600 for establishing a service session between the seeker device and the advertiser device, according to an embodiment of the present invention.

The seeker device 102 is connected to the advertiser device 104 for initiating the NFC data exchange. The seeker device 102 sends the service intent (i.e., service A) to the advertiser device 104 during the NFC data exchange. For example, the service A can be a display service. After receiving the service intent, the advertiser device 104 identifies whether the service A is supported by the advertiser device 104. The advertiser device 104 sends the matched service A to the seeker device 102 during the NFC data exchange after identifying the supported service A.

After receiving the supported service A by the seeker device 102, the service A is automatically initiated by establishing the service session between the seeker device 102 and the advertiser device 104.

FIG. 17 is a diagram illustrating a system for establishing the service session between the seeker device and the advertiser device, according to an embodiment of the present invention. The system 1700 includes the seeker device 102 and the advertiser device 104.

The seeker device 102 is connected to the advertiser device 104 for initiating the NFC data exchange. The seeker device 102 sends the service A, service B, and service C to the advertiser device 104 during the NFC data exchange. For example, the service A can be a print service, the service B can be a display service, and the service C can be the streaming services. After receiving the service A, service B, service C, the advertiser device 104 identifies whether the service A, service B, service C are supported by the advertiser device 104. The advertiser device 104 sends the matched service C to the seeker device 102 during the NFC data exchange after identifying the supported service C.

After receiving the supported service C by the seeker device 102, the service C is automatically initiated by establishing the service C session between the seeker device 102 and the advertiser device 104.

FIG. 18 is a diagram illustrating a computing environment 1802 implementing a method and system for establishing a service session between the seeker device 102 and the advertiser device 104 in the wireless P2P network, according to an embodiment of the present invention.

As depicted in the FIG. 18, the computing environment 1802 comprises at least one processing unit 1808 that includes a control unit 1804 and an Arithmetic Logic Unit (ALU) 1806, a memory 1810, a storage unit 1812, plurality of networking devices 1816 and a plurality Input output (I/O) devices 1814. The processing unit 1808 is responsible for processing the instructions of the algorithm. The processing unit 1808 receives commands from the control unit in order to perform its processing. Further, any logical and arithmetic operations involved in the execution of the instructions are computed with the help of the ALU 1806.

The overall computing environment 1802 can be composed of multiple homogeneous and/or heterogeneous cores, multiple CPUs of different kinds, special media and other accelerators. The processing unit 1808 is responsible for processing the instructions of the algorithm. Further, the plurality of processing units 1808 may be located on a single chip or over multiple chips.

The algorithm comprises instructions and codes required for the implementation of the methods described herein are stored in either the memory unit 1810 or the storage 1812 or both. At the time of execution, the instructions may be fetched from the corresponding memory 1810 and/or storage 1812, and executed by the processing unit 1808.

In the case of any hardware implementations various networking devices 1816 or external I/O devices 1814 may be connected to the computing environment to support the implementation through the networking unit and the I/O device unit.

The methods and systems described herein can be implemented through at least one software program running on at least one hardware device and performing network management functions to control the elements. The elements shown in FIGs. 1-18 can include blocks which can be at least one of a hardware device, or a combination of hardware device and software module.

While the present invention has been shown and described with reference to certain embodiments thereof, it should be understood by those skilled in the art that many variations and modifications of the method and apparatus described herein will still fall within scope of the present invention as defined in the appended claims

## Claims

1. A method of a seeker device for establishing a service session with an advertiser device over a wireless peer-to-peer, P2P, network, the method comprising:
generating, by the seeker device, a first intent corresponding to a plurality of first services and at least one parameter related to the plurality of first services;
sending, by the seeker device, the first intent to the advertiser device, during a near field communication, NFC, data exchange with the advertiser device, over an NFC network;
receiving, by the seeker device from the advertiser device, a second intent corresponding to at least one second service, during the NFC data exchange with the advertiser device, over the NFC network, wherein the at least one second service is supported by the advertiser device from the plurality of the first services, and
establishing the service session between the seeker device and the advertiser device over the wireless P2P network, based on the NFC data exchange of the first intent and the second intent, wherein the service session is related to the at least one second service.

2. The method of claim 1, further comprising:
identifying the at least one second service supported by the advertiser device based on the second intent.

3. The method of claim 1, wherein the at least one parameter is one of a connection capability, an operating channel, a listening channel, a Service Set identification, SSID, average, a password, a PIN, an Internet Protocol, IP, address of the advertiser device, and an IP address of the seeker device.

4. The method of claim 3, further comprising:
automatically forming a group with the advertiser device based on at least one of:
the connection capability, the operating channel, and the SSID average exchanged between the seeker device and the advertiser device during the NFC data exchange.

5. The method of claim 3, wherein the method further comprises:
determining a channel frequency between the seeker device and the advertiser device based on a listening channel exchanged between the seeker device and the advertiser device during the NFC data exchange.

6. A seeker device for establishing a service session over a wireless peer-to-peer, P2P, network, the seeker device comprising:
a first transceiver configured to communicate over a near field communication, NFC, network;
a second transceiver configured to communicate over a wireless peer-to-peer, P2P, network; and
at least one processing unit coupled to the first transceiver and the second transceiver;
wherein the at least one processing unit is configured to:
generate a first intent corresponding to a plurality of first services and at least one parameter related to the plurality of first services,
send the first intent to an advertiser device, during an NFC data exchange with the advertiser device, over the NFC network,
receive a second intent from the advertiser device corresponding to at least one second service over the NFC network , wherein the at least one second service is supported by the advertiser device from the plurality of the first services, and
establish the service session between the seeker device and the advertiser device, over the wireless P2P network, based on the NFC data exchange of the first intent and the second intent, wherein the service session is related to the at least one second service.

7. The seeker device of claim 6, wherein the at least one processing unit is adapted to operate one of claim 2 to claim 5.

8. A computer program product comprising a computer executable program code recorded on a computer readable non-transitory storage medium, the computer executable program code when executed performing a method comprising:
generating, by a seeker device, a first intent corresponding to a plurality of first services and at least one parameter related to the plurality of first services;
sending, by the seeker device, the first intent to an advertiser device, during a near field communication, NFC, data exchange with the advertiser device, over an NFC network;
receiving, by the seeker device from the advertiser device, a second intent corresponding to at least one second service, during the NFC data exchange with the advertiser device, over the NFC network, wherein the at least one second service is supported by the advertiser device from the plurality of the first services and
establishing a service session between the seeker device and the advertiser device, over the wireless P2P network, based on the NFC data exchange of the first intent and the second intent, wherein the service session is related to the at least one second service.

9. A method of an advertiser device for establishing a service session with a seeker device in a wireless peer-to-peer, P2P, network, the method comprising:
receiving , by the advertiser device, a first intent from the seeker device, during a near field communication, NFC, data exchange with the seeker device, over an NFC network , wherein the first intent corresponds to a plurality of first services and at least one parameter related to the plurality of first services;
sending, by the advertiser device, a second intent corresponding to at least one second service, during the NFC data exchange with the seeker device, over the NFC network, wherein the at least one second service is supported by the advertiser device from the plurality of the first services and
establishing the service session with the seeker device, over the wireless P2P network, based on the NFC data exchange of the first intent and the second intent, wherein the service session is related to the at least one second service.

10. The method of claim 9,
wherein the at least one parameter is one of a connection capability, an operating channel, a listening channel, a Service Set identification, SSID, average, a password, a PIN, an Internet Protocol, IP, address of the advertiser device, and an IP address of the seeker device.

11. The method of claim 10, further comprising:
forming a group with the seeker device based on at least one of:
the connection capability, the operating channel, and the SSID average exchanged between the seeker device and the advertiser device during the NFC data exchange.

12. The method of claim 10, further comprising:
determining a channel frequency between the seeker device and the advertiser device based on a listening channel exchanged between the seeker device and the advertiser device during the NFC data exchange.

13. A advertiser device for establishing a service session with a seeker device over a wireless peer-to-peer, P2P, network, the advertiser device comprising:
a first transceiver configured to communicate over a near field communication, NFC, network;
a second transceiver configured to communicate over the wireless P2P communication network; and
at least one processing unit coupled to the first transceiver and the second transceiver;
wherein the at least one processing unit is configured to:
receive a first intent from the seeker device, during an NFC data exchange with the seeker device, over the NFC network, wherein the first intent corresponds to a plurality of first services and at least one parameter related to the plurality of first services,
send a second intent corresponding to at least one second service, to the seeker device, during the NFC data exchange with the seeker device, over the NFC network , wherein the at least one second service is supported by the advertiser device from the plurality of the first services, and
establish the service session with seeker device, over the wireless P2P network, based on the NFC data exchange of the first intent and the second intent, wherein the service session is related to the at least one second service.

14. The advertiser device of claim 13, wherein the at least one processing unit is adapted to operate one of claim 10 to claim 12.

## Patentansprüche

1. Verfahren für eine Nachfragervorrichtung zum Herstellen einer Dienstsitzung mit einer Anbietervorrichtung über ein drahtloses Peer-to-Peer-, P2P, Netzwerk, wobei das Verfahren umfasst:
Erzeugen - durch die Nachfragervorrichtung - einer ersten Intention, die einer Mehrzahl erster Dienste und wenigstens einem die Mehrzahl erster Dienste betreffenden Parameter entspricht;
Senden - durch die Nachfragervorrichtung - der ersten Intention an die Anbietervorrichtung während eines Nahfeldkommunikations-, *near field communication* - NFC, Datenaustauschs mit der Anbietervorrichtung über ein NFC-Netzwerk;
Empfangen - durch die Nachfragervorrichtung von der Anbietervorrichtung - einer zweiten Intention, die wenigstens einem zweiten Dienst entspricht, während des NFC-Datenaustauschs mit der Anbietervorrichtung über das NFC-Netzwerk, wobei der wenigstens eine zweite Dienst im Rahmen der Mehrzahl der ersten Dienste durch die Anbietervorrichtung unterstützt wird, und
Herstellen der Dienstsitzung zwischen der Nachfragervorrichtung und der Anbietervorrichtung über das drahtlose P2P-Netzwerk basierend auf dem NFC-Datenaustausch der ersten Intention und der zweiten Intention, wobei die Dienstsitzung den wenigstens einen zweiten Dienst betrifft.

2. Verfahren nach Anspruch 1, ferner umfassend:
Ermitteln des wenigstens einen zweiten Dienstes, der durch die Anbietervorrichtung unterstützt wird, basierend auf der zweiten Intention.

3. Verfahren nach Anspruch 1, wobei der wenigstens eine Parameter eines aus einer Verbindungsfähigkeit, einem Betriebskanal, einem Hörkanal, einem Service-Set-Identification-, SSID, Durchschnitt, einem Passwort, einer PIN, einer Internetprotokoll-, IP, Adresse der Anbietervorrichtung und einer IP-Adresse der Nachfragervorrichtung ist.

4. Verfahren nach Anspruch 3, ferner umfassend:
automatisches Ausbilden einer Gruppe mit der Anbietervorrichtung basierend auf wenigstens einem der Folgenden:
der Verbindungsfähigkeit, dem Betriebskanal und dem SSID-Durchschnitt, die während des NFC-Datenaustauschs zwischen der Nachfragervorrichtung und der Anbietervorrichtung ausgetauscht werden.

5. Verfahren nach Anspruch 3, wobei das Verfahren ferner umfasst:
Bestimmen einer Kanalfrequenz zwischen der Nachfragervorrichtung und der Anbietervorrichtung basierend auf einem Hörkanal, der während des NFC-Datenaustauschs zwischen der Nachfragervorrichtung und der Anbietervorrichtung ausgetauscht wird.

6. Nachfragervorrichtung zum Herstellen einer Dienstsitzung über ein drahtloses Peer-to-Peer-, P2P, Netzwerk, wobei die Nachfragervorrichtung umfasst:
einen ersten Sendeempfänger, der dazu ausgestaltet ist, über ein Nahfeldkommunikations-, *near field communication* - NFC, Netzwerk zu kommunizieren;
einen zweiten Sendeempfänger, der dazu ausgestaltet ist, über ein drahtloses Peer-to-Peer-, P2P, Netzwerk zu kommunizieren; und
wenigstens eine Verarbeitungseinheit, die mit dem ersten Sendeempfänger und dem zweiten Sendeempfänger gekoppelt ist;
wobei die wenigstens eine Verarbeitungseinheit für Folgendes ausgestaltet ist:
Erzeugen einer ersten Intention, die einer Mehrzahl erster Dienste und wenigstens einem die Mehrzahl erster Dienste betreffenden Parameter entspricht,
Senden der ersten Intention an eine Anbietervorrichtung während eines NFC-Datenaustauschs mit der Anbietervorrichtung über das NFC-Netzwerk,
Empfangen einer zweiten Intention von der Anbietervorrichtung, die wenigstens einem zweiten Dienst entspricht, über das NFC-Netzwerk, wobei der wenigstens eine zweite Dienst im Rahmen der Mehrzahl der ersten Dienste durch die Anbietervorrichtung unterstützt wird, und
Herstellen der Dienstsitzung zwischen der Nachfragervorrichtung und der Anbietervorrichtung über das drahtlose P2P-Netzwerk basierend auf dem NFC-Datenaustausch der ersten Intention und der zweiten Intention, wobei die Dienstsitzung den wenigstens einen zweiten Dienst betrifft.

7. Nachfragervorrichtung nach Anspruch 6, wobei die wenigstens eine Verarbeitungseinheit dazu ausgelegt ist, einen von Anspruch 2 bis Anspruch 5 zu realisieren.

8. Computerprogrammprodukt, das einen computerausführbaren Programmcode umfasst, der auf einem computerlesbaren nichtflüchtigen Speichermedium aufgezeichnet ist, wobei der computerausführbare Programmcode, wenn er ausgeführt wird, ein Verfahren durchführt, das umfasst:
Erzeugen - durch eine Nachfragervorrichtung - einer ersten Intention, die einer Mehrzahl erster Dienste und wenigstens einem die Mehrzahl erster Dienste betreffenden Parameter entspricht;
Senden - durch die Nachfragervorrichtung - der ersten Intention an eine Anbietervorrichtung während eines Nahfeldkommunikations-, *near field communication* - NFC, Datenaustauschs mit der Anbietervorrichtung über ein NFC-Netzwerk;
Empfangen - durch die Nachfragervorrichtung von der Anbietervorrichtung - einer zweiten Intention, die wenigstens einem zweiten Dienst entspricht, während des NFC-Datenaustauschs mit der Anbietervorrichtung über das NFC-Netzwerk, wobei der wenigstens eine zweite Dienst im Rahmen der Mehrzahl der ersten Dienste durch die Anbietervorrichtung unterstützt wird, und
Herstellen einer Dienstsitzung zwischen der Nachfragervorrichtung und der Anbietervorrichtung über das drahtlose P2P-Netzwerk basierend auf dem NFC-Datenaustausch der ersten Intention und der zweiten Intention, wobei die Dienstsitzung den wenigstens einen zweiten Dienst betrifft.

9. Verfahren für eine Anbietervorrichtung zum Herstellen einer Dienstsitzung mit einer Nachfragervorrichtung in einem drahtlosen Peer-to-Peer-, P2P, Netzwerk, wobei das Verfahren umfasst:
Empfangen - durch die Anbietervorrichtung - einer ersten Intention von der Nachfragervorrichtung während eines Nahfeldkommunikations-, *near field communication* - NFC, Datenaustauschs mit der Nachfragervorrichtung über ein NFC-Netzwerk, wobei die erste Intention einer Mehrzahl erster Dienste und wenigstens einem die Mehrzahl erster Dienste betreffenden Parameter entspricht;
Senden - durch die Anbietervorrichtung - einer zweiten Intention, die wenigstens einem zweiten Dienst entspricht, während des NFC-Datenaustauschs mit der Nachfragervorrichtung über das NFC-Netzwerk, wobei der wenigstens eine zweite Dienst im Rahmen der Mehrzahl der ersten Dienste durch die Anbietervorrichtung unterstützt wird, und
Herstellen der Dienstsitzung mit der Nachfragervorrichtung über das drahtlose P2P-Netzwerk basierend auf dem NFC-Datenaustausch der ersten Intention und der zweiten Intention, wobei die Dienstsitzung den wenigstens einen zweiten Dienst betrifft.

10. Verfahren nach Anspruch 9,
wobei der wenigstens eine Parameter eines aus einer Verbindungsfähigkeit, einem Betriebskanal, einem Hörkanal, einem Service-Set-Identification-, SSID, Durchschnitt, einem Passwort, einer PIN, einer Internetprotokoll-, IP, Adresse der Anbietervorrichtung und einer IP-Adresse der Nachfragervorrichtung ist.

11. Verfahren nach Anspruch 10, ferner umfassend:
Ausbilden einer Gruppe mit der Nachfragervorrichtung basierend auf wenigstens einem der Folgenden:
der Verbindungsfähigkeit, dem Betriebskanal und dem SSID-Durchschnitt, die während des NFC-Datenaustauschs zwischen der Nachfragervorrichtung und der Anbietervorrichtung ausgetauscht werden.

12. Verfahren nach Anspruch 10, ferner umfassend:
Bestimmen einer Kanalfrequenz zwischen der Nachfragervorrichtung und der Anbietervorrichtung basierend auf einem Hörkanal, der während des NFC-Datenaustauschs zwischen der Nachfragervorrichtung und der Anbietervorrichtung ausgetauscht wird.

13. Anbietervorrichtung zum Herstellen einer Dienstsitzung mit einer Nachfragervorrichtung über ein drahtloses Peer-to-Peer-, P2P, Netzwerk, wobei die Anbietervorrichtung umfasst:
einen ersten Sendeempfänger, der dazu ausgestaltet ist, über ein Nahfeldkommunikations-, *near field communication* - NFC, Netzwerk zu kommunizieren;
einen zweiten Sendeempfänger, der dazu ausgestaltet ist, über das drahtlose P2P-Kommunikationsnetzwerk zu kommunizieren; und
wenigstens eine Verarbeitungseinheit, die mit dem ersten Sendeempfänger und dem zweiten Sendeempfänger gekoppelt ist;
wobei die wenigstens eine Verarbeitungseinheit für Folgendes ausgestaltet ist:
Empfangen einer ersten Intention von der Nachfragervorrichtung während eines NFC-Datenaustauschs mit der Nachfragervorrichtung über das NFC-Netzwerk, wobei die erste Intention einer Mehrzahl erster Dienste und wenigstens einem die Mehrzahl erster Dienste betreffenden Parameter entspricht,
Senden einer zweiten Intention, die wenigstens einem zweiten Dienst entspricht, an die Nachfragervorrichtung während des NFC-Datenaustauschs mit der Nachfragervorrichtung über das NFC-Netzwerk, wobei der wenigstens eine zweite Dienst im Rahmen der Mehrzahl der ersten Dienste durch die Anbietervorrichtung unterstützt wird, und
Herstellen der Dienstsitzung mit der Nachfragervorrichtung über das drahtlose P2P-Netzwerk basierend auf dem NFC-Datenaustausch der ersten Intention und der zweiten Intention, wobei die Dienstsitzung den wenigstens einen zweiten Dienst betrifft.

14. Anbietervorrichtung nach Anspruch 13, wobei die wenigstens eine Verarbeitungseinheit dazu ausgelegt ist, einen von Anspruch 10 bis Anspruch 12 zu realisieren.

## Revendications

1. Procédé d'ouverture par un dispositif chercheur d'une session de service avec un dispositif d'annonceur publicitaire via un réseau poste-à-poste (P2P) sans fil, ledit procédé comprenant :
la génération par le dispositif chercheur d'une première intention correspondant à une pluralité de premiers services et d'au moins un paramètre relatif à la pluralité de premiers services ;
la transmission par le dispositif chercheur de la première intention au dispositif d'annonceur publicitaire pendant un échange de données par communication en champ proche (NFC) avec le dispositif d'annonceur publicitaire via un réseau NFC ;
la réception par le dispositif chercheur d'une deuxième intention en provenance du dispositif d'annonceur publicitaire, correspondant à au moins un deuxième service, pendant l'échange de données NFC avec le dispositif d'annonceur publicitaire, via le réseau NFC, ledit au moins un deuxième service étant assisté par le dispositif d'annonceur publicitaire parmi la pluralité de premiers services, et
l'ouverture de la session de service entre le dispositif chercheur et le dispositif d'annonceur publicitaire via le réseau P2P sans fil, sur la base de l'échange de données NFC de la première intention et de la deuxième intention, la session de service étant relative audit au moins un deuxième service.

2. Procédé selon la revendication 1, comprenant en outre :
l'identification dudit au moins un deuxième service assisté par le dispositif d'annonceur publicitaire sur la base de la deuxième intention.

3. Procédé selon la revendication 1, où ledit au moins un paramètre est l'un des suivants : une capacité de connexion, un canal opérationnel, un canal d'écoute, une moyenne d'identification d'un ensemble de services (SSID), un mot de passe, un PIN, une adresse de protocole Internet (IP) du dispositif d'annonceur publicitaire, et une adresse IP du dispositif chercheur.

4. Procédé selon la revendication 3, comprenant en outre :
la formation automatique d'un groupe avec le dispositif d'annonceur publicitaire sur la base d'au moins un des paramètres suivants :
la capacité de connexion, le canal opérationnel, et la moyenne SSID, échangé entre le dispositif chercheur et le dispositif d'annonceur publicitaire pendant l'échange de données NFC.

5. Procédé selon la revendication 3, ledit procédé comprenant en outre :
la détermination d'une fréquence de canal entre le dispositif chercheur et le dispositif d'annonceur publicitaire sur la base d'un canal d'écoute échangé entre le dispositif chercheur et le dispositif d'annonceur publicitaire pendant l'échange de données NFC.

6. Dispositif chercheur pour l'ouverture d'une session de service via un réseau poste-à-poste (P2P) sans fil, ledit dispositif chercheur comprenant :
un premier émetteur-récepteur prévu pour communiquer via un réseau de communication en champ proche (NFC) ;
un deuxième émetteur-récepteur prévu pour communiquer via un réseau poste-à-poste (P2P) sans fil ; et
au moins une unité de traitement reliée au premier émetteur-récepteur et au deuxième émetteur-récepteur ;
ladite au moins une unité de traitement étant prévue pour :
générer une première intention correspondant à une pluralité de premiers services et au moins un paramètre relatif à la pluralité de premiers services,
transmettre la première intention à un dispositif d'annonceur publicitaire pendant un échange de données NFC avec le dispositif d'annonceur publicitaire, via le réseau NFC,
recevoir via le réseau NFC une deuxième intention en provenance du dispositif d'annonceur publicitaire, correspondant à au moins un deuxième service, ledit au moins un deuxième service étant assisté par le dispositif d'annonceur publicitaire parmi la pluralité de premiers services, et
ouvrir la session de service entre le dispositif chercheur et le dispositif d'annonceur publicitaire, via le réseau P2P sans fil, sur la base de l'échange de données NFC de la première intention et de la deuxième intention, la session de service étant relative audit au moins un deuxième service.

7. Dispositif chercheur selon la revendication 6, où ladite au moins une unité de traitement est prévue pour fonctionner selon l'une des revendications 2 à 5.

8. Produit de programme informatique comprenant un code programme exécutable par ordinateur, enregistré sur un support de stockage non transitoire lisible par ordinateur, ledit code programme exécutable par ordinateur exécutant une fois lancé un procédé comprenant :
la génération par un dispositif chercheur d'une première intention correspondant à une pluralité de premiers services et d'au moins un paramètre relatif à la pluralité de premiers services ;
la transmission par le dispositif chercheur de la première intention à un dispositif d'annonceur publicitaire pendant un échange de données par communication en champ proche (NFC) avec le dispositif d'annonceur publicitaire via un réseau NFC ;
la réception par le dispositif chercheur d'une deuxième intention en provenance du dispositif d'annonceur publicitaire, correspondant à au moins un deuxième service, pendant l'échange de données NFC avec le dispositif d'annonceur publicitaire, via le réseau NFC, ledit au moins un deuxième service étant assisté par le dispositif d'annonceur publicitaire parmi la pluralité de premiers services, et
l'ouverture d'une session de service entre le dispositif chercheur et le dispositif d'annonceur publicitaire via le réseau P2P sans fil, sur la base de l'échange de données NFC de la première intention et de la deuxième intention, la session de service étant relative audit au moins un deuxième service.

9. Procédé d'ouverture par un dispositif d'annonceur publicitaire d'une session de service avec un dispositif chercheur dans un réseau poste-à-poste (P2P) sans fil, ledit procédé comprenant :
la réception par le dispositif d'annonceur publicitaire d'une première intention du dispositif chercheur, pendant un échange de données par communication en champ proche (NFC) avec le dispositif d'annonceur publicitaire via un réseau NFC, la première intention correspondant à une pluralité de premiers services et d'au moins un paramètre relatif à la pluralité de premiers services ;
la transmission par le dispositif d'annonceur publicitaire d'une deuxième intention correspondant audit au moins un deuxième service pendant l'échange de données NFC avec le dispositif chercheur, via le réseau NFC, ledit au moins un deuxième service étant assisté par le dispositif d'annonceur publicitaire parmi la pluralité de premiers services et
l'ouverture de la session de service avec le dispositif chercheur, via le réseau P2P sans fil, sur la base de l'échange de données NFC de la première intention et de la deuxième intention, la session de service étant relative audit au moins un deuxième service.

10. Procédé selon la revendication 9,
où ledit au moins un paramètre est l'un des suivants : une capacité de connexion, un canal opérationnel, un canal d'écoute, une moyenne d'identification d'un ensemble de services (SSID), un mot de passe, un PIN, une adresse de protocole Internet (IP) du dispositif d'annonceur publicitaire, et une adresse IP du dispositif chercheur.

11. Procédé selon la revendication 10, comprenant en outre :
la formation d'un groupe avec le dispositif d'annonceur publicitaire sur la base d'au moins un des paramètres suivants :
la capacité de connexion, le canal opérationnel, et la moyenne SSID, échangé entre le dispositif chercheur et le dispositif d'annonceur publicitaire pendant l'échange de données NFC.

12. Procédé selon la revendication 10, comprenant en outre :
la détermination d'une fréquence de canal entre le dispositif chercheur et le dispositif d'annonceur publicitaire sur la base d'un canal d'écoute échangé entre le dispositif chercheur et le dispositif d'annonceur publicitaire pendant l'échange de données NFC.

13. Dispositif d'annonceur publicitaire pour l'ouverture d'une session de service avec un dispositif chercheur via un réseau poste-à-poste (P2P) sans fil, ledit dispositif d'annonceur publicitaire comprenant :
un premier émetteur-récepteur prévu pour communiquer via un réseau de communication en champ proche (NFC) ;
un deuxième émetteur-récepteur prévu pour communiquer via le réseau de communication P2P sans fil ; et
au moins une unité de traitement reliée au premier émetteur-récepteur et au deuxième émetteur-récepteur ;
ladite au moins une unité de traitement étant prévue pour :
recevoir une première intention du dispositif chercheur pendant un échange de données NFC avec le dispositif chercheur, via le réseau NFC, la première intention correspondant à une pluralité de premiers services et au moins un paramètre relatif à la pluralité de premiers services,
transmettre au dispositif chercheur une deuxième intention correspondant à au moins un deuxième service pendant l'échange de données NFC avec le dispositif chercheur, via le réseau NFC, ledit au moins un deuxième service étant assisté par le dispositif d'annonceur publicitaire parmi la pluralité de premiers services, et
ouvrir la session de service avec le dispositif chercheur via le réseau P2P sans fil, sur la base de l'échange de données NFC de la première intention et de la deuxième intention, la session de service étant relative audit au moins un deuxième service.

14. Dispositif d'annonceur publicitaire selon la revendication 13, où ladite au moins une unité de traitement est prévue pour fonctionner selon l'une des revendications 10 à 12.
